Europäisches Patentamt

European Patent Office

Office européen des brevets

(19)

(11) **EP 0 772 203 A1**

(12) **DEMANDE DE BREVET EUROPEEN**

(43) Date de publication:
**07.05.1997 Bulletin 1997/19**

(51) Int Cl.6: **G21B 1/00**, H05H 1/22

(21) Numéro de dépôt: **96402361.8**

(22) Date de dépôt: **06.11.1996**

(84) Etats contractants désignés:
**DE FR GB**

(30) Priorité: **06.11.1995 FR 9513065**

(71) Demandeur: **Marie, Georges Robert Pierre
92260 Fontenay-aux-Roses (FR)**

(72) Inventeur: **Marie, Georges Robert Pierre
92260 Fontenay-aux-Roses (FR)**

(74) Mandataire: **Moncheny, Michel et al
c/o Cabinet Lavoix
2 Place d'Estienne d'Orves
75441 Paris Cedex 09 (FR)**

(54) **Dispositif provoquant et utilisant la micro-fusion thermonucléaire**

(57) L'invention concerne un dispositif provoquant la fusion thermonucléaire du deutérium et délivrant l'énergie produite sous forme d'énergie électrique. Il comporte : une chambre (1) contenant du deutérium et des moyens pour focaliser deux faisceaux lasers selon des modes quadripolaires tournant transverse électrique, qui ont pour axe commun l'axe de la chambre, l'un, dont la longueur d'onde est dix fois supérieure à celle de l'autre, génère une colonne de plasma qui, en son milieu, constitue la cible sur laquelle est concentrée l'énergie du second faisceau qui provoque l'ignition à partir de laquelle se propagent, de part et d'autre, dans la colonne de plasma, des ondes de choc électroniques qui s'amplifient au détriment de nouvelles fusions thermonucléaires et engendrent des impulsions de courant électrique recueillies par deux anodes (9) placées sur l'axe, à proximité des extrémités de la colonne de plasma.

*Fig. 1*

EP 0 772 203 A1

## Description

La présente invention concerne un générateur d'énergie électrique alimenté par la fusion thermonucléaire électrocatalysée du deutérium, c'est à dire par la réaction :

$$(1) \qquad {}_1D^2 + {}_1D^2 + e^- \rightarrow {}_2H^4{}_e + (e^-\ \text{relativiste})$$

L'inventeur a énoncé les principes de l'électrocatalyse de la fusion dans deux brevets :

le n° 2.690.778 déposé le 14.04.92 sous le n° 92.04574
et le n° 2.718.275 déposé le 29.03.94 sous le n° 94.03643

tous deux sous le même titre que le présent.

Dans ces deux brevets, l'inventeur a développé le principe de l'électro-catalyse de la fusion thermonucléaire du deutérium. Il l'applique ici pour produire de l'énergie électrique.

Il convient de rappeler que lorsque deux noyaux D qui commencent à être liés par la force de YUKAWA et tournent autour d'un axe, captent un électron dont le moment magnétique est parallèle au moment magnétique engendré par les charges qui tournent avec les noyaux D, l'électron se met à osciller selon l'axe : le champ du doublet magnétique lié à l'électron soumet les noyaux D à un champ magnétique alternatif qui les fait dévier de différents côtés si bien que les trajectoires sont déformées. La distance des particules D au centre devient fluctuante ; lorsqu'elle diminue, la force de YUKAWA accélère les noyaux D ce qui augmente le champ magnétique qu'ils engendrent et du même coup la force qui rappelle l'électron vers le centre. Ainsi s'opère le transfert d'énergie du potentiel de YUKAWA à l'énergie cinétique de l'électron qui oscille de plus en plus vite dans un espace de plus en plus réduit.

Dans le plan où l'on écrit les équations de la dynamique pour le système binaire constitué par les noyaux, cette énergie doit être considérée comme perdue. Les deux noyaux peuvent se rapprocher jusqu'à ce que la distance qui les sépare atteigne le niveau fondamental.

L'électron est alors lancé dans la direction qui était celle de son moment magnétique lorsqu'il fut capté, mais dans un sens aléatoire.

Dans un champ magnétique assez élevé pour orienter parallèlement les moments magnétiques des électrons, la fusion produit des jets parallèles d'électrons relativistes.

Un tel jet lancé dans un plasma se thermalise en provoquant une onde de choc où la densité électronique est très élevée. Cette densité n'est pas homogène. Elle est considérablement renforcée par le fait que des électrons lancés à une vitesse voisine de C ont tendance à se disposer en chapelet sous l'effet du pincement magnétique et leurs moments magnétiques ont tendance à s'aligner.

Lorsque de tels chapelets défilent entre deux noyaux qui se dirigent l'un vers l'autre, ils neutralisent la répulsion et causent même une attraction entre les noyaux jusqu'à ce que la distance soit assez réduite pour que la force de YUKAWA agisse. Un électron provoque alors la fusion électrocatalysée dans un milieu où la température et la densité moyenne sont très insuffisantes pour provoquer la fusion sans l'aide de ce mécanisme qui fonctionne un peu comme un tokamak à l'échelle particulière. Au lieu d'être lancé par variation d'induction magnétique, le courant d'électrons est lancé par le choc des électrons relativistes.

Dans le brevet n° 2.718.275, l'inventeur a calculé le diamètre de la section de choc correspondant au fait que l'électron passe entre deux noyaux très proches. Il est très supérieur à la distance entre les deux noyaux, cela est dû au fait qu'à une distance assez grande, l'électron est attiré par le centre électrique des noyaux. L'inventeur a montré aussi que dans ces conditions, lorsque deux noyaux sont en train de se rapprocher, une partie de l'énergie cinétique des électrons est utilisée pour vaincre le potentiel de répulsion électrostatique des deux noyaux. Cela est dû au fait que les deux noyaux sont plus rapprochés lorsque l'électron s'éloigne que lorsqu'il s'approche.

Lorsque deux jets d'électrons relativistes sont lancés en sens inverses dans la même zone du plasma, le phénomène de pincement magnétique autour des électrons entraînés par les électrons relativistes s'intensifie et le processus de fusion thermonucléaire est accéléré.

Mais une telle configuration de courants parallèles est très instable, les courants qui vont dans le même sens convergent, forment des filets de courant de section de plus en plus grande, maintenus ensemble par un pincement magnétique macroscopique, tandis que les courants allant en sens contraire sont dispersés.

Ce processus de séparation des courants parallèles selon leur sens est grandement accéléré si l'on applique un champ magnétique continu perpendiculaire aux dits courants. Il en est ainsi dans le tokamak : le courant issu de la fusion ayant même sens que celui du tokamak contribue à faire progresser rapidement la fusion, celui qui va en sens contraire est rapidement thermalysé.

La présente invention concerne des moyens pour former dans une chambre contenant du deutérium, un plasma confiné dans un ellipsoïde de révolution très allongé et soumis à un champ magnétique axial intense, et par ailleurs des moyens pour provoquer dans le voisinage du centre de l'ellipsoïde une compression qui déclenche la fusion thermonucléaire selon la réaction (1).

Cette réaction se propage par l'intermédiaire des électrons relativistes dans les deux sens du grand axe de l'ellipsoïde.

L'explosion d'électrons ainsi produite provoque une forte variation de potentiel entre un couple d'électrodes placées dans le voisinage des sommets de l'ellipsoïde et d'autres électrodes placées dans le voisinage de l'équateur de l'ellipsoïde qui rétablissent l'électroneutralité du plasma.

Pour confiner le plasma comme on vient de le dire et pour provoquer l'explosion l'invention utilise les propriétés confinantes des modes quadripolaires tournants.

Pour décrire ces modes il convient de rappeler la théorie de la propagation dans les guides d'onde circulaire : le mode transverse électrique d'ordre deux, $TE_2$, peut être considéré comme une somme d'ondes planes élémentaires qui, en coordonnées sphériques $\varphi$, $\theta$, $z$ ont, dans le plan d'azimut $\varphi$ leur vecteur de Poynting dirigé dans la direction de colatitude $\theta$ constante, et, leur vecteur champ électrique perpendiculaire au plan formé par le vecteur de Poynting et l'axe oz, avec une intensité proportionnelle à $\cos 2\varphi \, d\varphi$.

On obtient le mode $TE_2$ orthogonal au précédent en remplaçant $\cos 2\varphi$ par $\sin 2\varphi$.

Les modes transverses magnétiques $TM_2$ se déduisent des précédents $TE_2$ en intervertissant le champ magnétique et le champ électrique. On remarque que dans ces conditions, le vecteur champ électrique fait un angle $\theta$ avec le plan de section et sa composante dans ce plan est multipliée par $\cos \theta$.

Pour une même puissance des ondes planes élémentaires, la densité d'énergie électrique en un point voisin de l'axe est pour les ondes $TM_2$ égale à celle des ondes $TE_2$ multipliée par $\cos^2 \theta$.

Dans le voisinage de l'axe qui est le centre de la tache focale, la carte du champ électrique est la même dans les deux cas. Les lignes de champ électrique sont des hyperboles équilatères que l'on va définir:

Dans le plan de section un point est repéré par ses coordonnées exprimées en nombres complexes :

$$z = x + jy = p \, \exp j\varphi$$

Le nombre complexe imaginaire conjugué s'écrit :

$$z^* = x - jy = \rho \exp(-j\varphi)$$

Le champ électrique en tout point défini par le vecteur:

$$(2) \qquad E = E_o \, \frac{\rho}{\sigma} \, \exp(-j\varphi) = E_o \frac{z^*}{\sigma}$$

où $\sigma$ est une longueur qui donne l'échelle, est l'expression d'un champ quadripolaire continu. En effet, en un point $\rho_o$ $\varphi_o$ le champ électrique E est dirigé dans la direction $-\varphi$. La pente de la tangente à la ligne de champ est :

$$\frac{dy}{dx} = tg\,(-\varphi) = -\frac{y}{x}$$

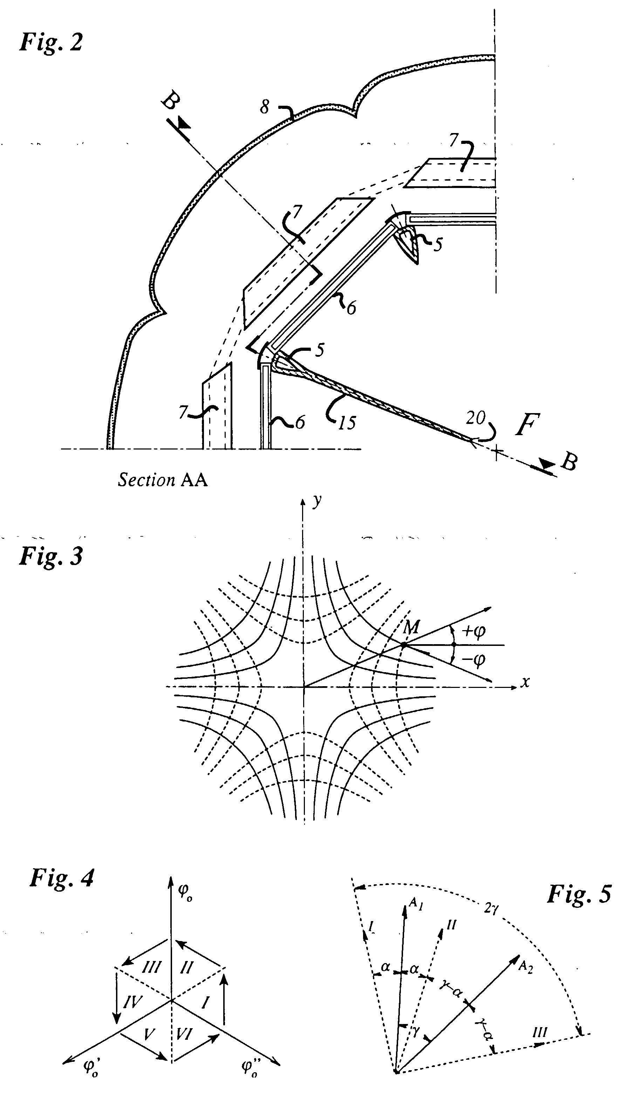

En intégrant cette équation différentielle on obtient $xy = $ constante, qui est une hyperbole équilatère tracée en noir fig.2. Les lignes de champ orthogonales tracées en trait interrompus correspondent à une expression analogue à la précédente multipliée par j.

En passant aux champs alternatifs on a pour deux champs orthogonaux et en quadrature de phase :

$$E' = E_o \, \frac{z^*}{\sigma} \cos \omega t$$

$$E'' = jE_o \frac{z^*}{\sigma} \sin \omega t$$

Le champ quadripolaire tournant est la somme des deux précédents :

$$(3) \qquad E = E' + E'' = E_o \frac{z^*}{\sigma} \exp j\omega t = E_o \frac{\rho}{\sigma} \exp j(\omega t - \varphi)$$

On va montrer maintenant comment ce champ quadripolaire confine un plasma.

Un électron soumis à un tel champ dans une région voisine de $z_o = \rho_o \exp j\varphi_o$ se met à tourner de telle sorte que la force centrifuge doit équilibrer l'action du champ électrique. Ce qui s'écrit :

$$m\omega^2 \alpha = eE$$

$$\alpha = \frac{eE_o}{m\omega^2} \frac{z_o^*}{\sigma} \exp(j\omega t)$$

La coordonnée complexe de l'électron décrivant le cercle est:

$$z = z_o + \alpha$$

et la force totale à laquelle il est soumis s'écrit :

$$(4) \qquad eE = eE_o \frac{z_0^* + \alpha^*}{\sigma} \exp(j\omega t) = eE_o \exp(j\omega t) - \frac{e^2 E_o^2 z_o}{m\omega^2 \sigma^2}$$

qui fait apparaître une force indépendante du temps et dirigée vers l'origine, c'est la force de confinement. En tenant compte de l'expression classique du rayon de l'électron :

$$\beta = \frac{e^2}{4\pi\varepsilon_0 mc^2}$$

cette force de confinement s'écrit :

$$(5) \qquad F \text{ confinement} = \frac{e^2 E_o^2 \beta \lambda^2}{\pi\sigma^2} z$$

Elle est dirigée vers l'origine et proportionnelle à l'éloignement de cette origine, ce qui signifie qu'elle provoque une contraction radiale homothétique.

Axialement, le confinement est magnétique. Tous ces courants circulaires engendrés par le mouvement des électrons s'attirent comme les spires d'un solénoïde parcouru par un courant continu. La contraction électromagnétique est radiale et au début de son action des électrons s'écoulent le long de l'axe. Cela a pour effet de resserrer sur l'axe les couches d'électrons situées dans la zone équatoriale et donc de renforcer le champ magnétique jusqu'au blocage par pincement du courant qui longe l'axe.

On va calculer maintenant l'énergie nécessaire pour produire le confinement.

En se reportant à la théorie des guides métalliques circulaires et plus spécialement à l'expression complète du mode $TE_2$ on peut calculer, d'une part la puissance de l'onde de confinement en fonction du maximum $E_o$ du champ électrique. D'autre part connaissant la valeur de $\frac{dE}{d\rho}$ dans le voisinage de l'origine on en tire la valeur de $\sigma$ : $\frac{E_o}{\sigma} = \frac{dE}{d\rho}$.

A la force de confinement correspond un potentiel de confinement qui atteint $12 \times 10^3$ volts pour une puissance laser de $10^9$ watts.

Le calcul précédent néglige la charge d'espace. Un calcul qui en tient compte montre que dans la zone où le champ électrique est maximum la densité électronique est voisine de la densité $\frac{\pi}{\beta\lambda^2}$ qui est la densité à laquelle le plasma résonne pour la longueur d'onde $\lambda$. A cette résonance correspond une déformation elliptique du nuage électronique, qui se propage en tournant comme les marées autour de la Terre et une surtention qui est de l'ordre de quarante. On peut diviser la puissance laser par ce nombre pour obtenir le potentiel de 12 keV mais le fait que les électrons défilent en chapelet entre les noyaux facilite le passage de la barrière de potentiel et permet de se contenter d'un potentiel de confinement plus bas.

Par ailleurs, le fait de provoquer la fusion électro-catalysée permet d'abaisser encore la puissance laser.

En effet dans le cas où l'on tente la fusion par mode confinant, le volume du plasma est très petit : dans le cas de la fusion classique les premiers coups réussis dispersent le plasma et il n'y a pas de seconds coups tandis que si l'on provoque la fusion électro-catalysée, un coup improbable réussi engendre une force électromotrice qui renforce celle créée par le mode confinant. Ce mode provoque un courant radial convergent en un point de l'axe du système et la fusion provoque un jet d'électrons relativistes selon l'axe et dans les deux sens.

Non seulement il n'y a pas dispersion du plasma mais le recul subit par les noyaux $_2H_e{}^4$ au moment où ils lancent leur électron relativiste contribuent à comprimer le plasma, ce qui facilite encore la fusion et permet de l'envisager avec une puissance laser de quelques megawatts.

Dans le but de transformer un faisceau laser ordinaire en faisceau se propageant selon un mode confinant utilisable pour provoquer la fusion électro-catalysée, l'inventeur revendique l'application nouvelle de procédés pour lesquels il a déjà obtenu des brevets, notamment le brevet n° 76.38960 déposé le 23 décembre 1976 publié sous le n° 2.385.241 ayant pour titre : *"Convertisseur de polarisation pour faisceaux laser et générateur de plasma les utilisant"* et le brevet n° 79.05542 déposé le 2 mars 1979, publié sous le n° 2.450.518 ayant pour titre *"Convertisseur de mode $TM_o$-$TE_o$"*

**Les transformateurs de mode**

Le brevet n° 76.38960 décrit des transformateurs de mode, c'est-à-dire des lentilles sur lesquelles on applique soit des surépaisseurs causant un déphasage contrôlé fig.6 et 7, soit des lames demi-onde qui modifient l'orientation du champ électrique fig.8 et 9 de telle sorte qu'au foyer de la lentille on obtienne par interférence un mode quadripolaire tournant.

**a) L'onde initiale est polarisée circulairement**

C'est le cas le plus simple, le vecteur champ électrique E est de la forme $E_o$ exp $\overline{j\omega}t$.

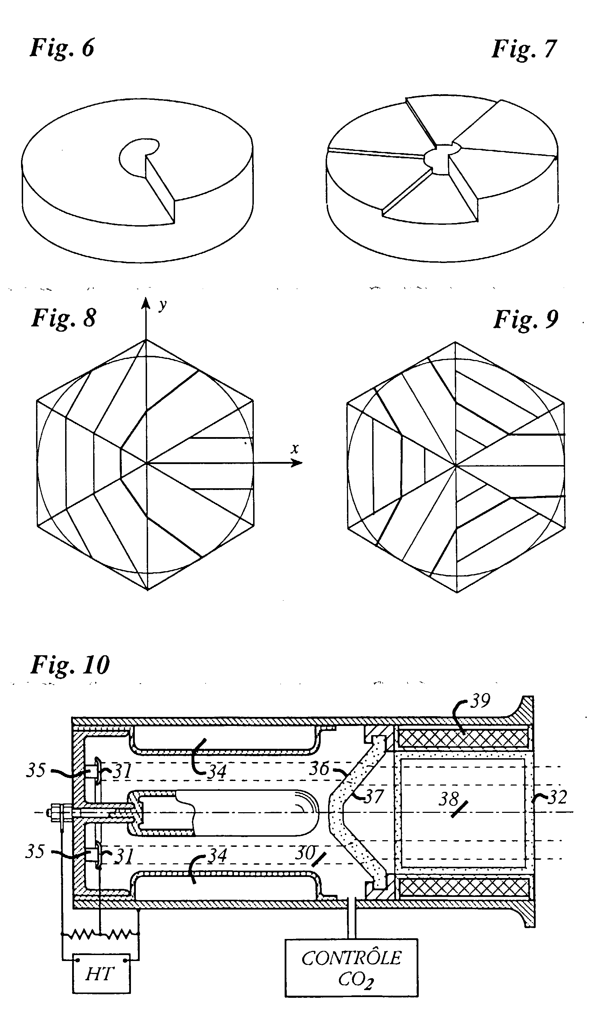

On fait traverser à l'onde un "déphaseur azimutal" qui peut être, comme fig.6, un dioptre comportant une surépaisseur hélicoïdale, c'est-à-aire constante le long de tout rayon et variant en fonction de l'azimut $\varphi$ pour causer un déphasage égal à $\varphi$, ou comme fig.7 un déphaseur azimutal à marches qui constitue une approximation du précédent. Le résultat est le même : on obtient au foyer une onde dont l'intensité est nulle au centre, par suite des interférences, et dont le vecteur champ électrique est de la forme (3) qui correspond au champ quadripolaire tournant.

On remarque que si le sens de rotation de l'onde et le sens de progression du déphasage changent l'un par rapport à l'autre, on n'obtient plus au foyer un mode quadripolaire tournant mais un ensemble de modes $TE_o$ et $TM_o$ en quadrature de phase.

On peut voir aussi que le mode quadripolaire tournant que l'on a obtenu partage son énergie entre un mode TE et un mode TM. Cela n'a pas d'importance si l'angle $\theta$ que fait la direction de propagation des ondes élémentaires avec l'axe du système lorsqu'elles arrivent dans la tache focale, mais lorsque $\theta$ est grand il vaut mieux que le mode quadripolaire tournant soit transverse électrique et pour cela il faut partir d'un mode $TE_o$

**b) L'onde initiale est une onde $TE_o$**

C'est-à-dire une onde dont les lignes de champ électrique sont des cercles concentriques. Le champ électrique est de la forme $E= jE_o\frac{\rho}{\sigma}\cos\omega t$. On la transforme en onde quadripolaire tournante à l'aide d'un "déphaseur azimutal à marches". fig.7. Il s'agit de provoquer un déphasage égal à deux fois l'azimut, et pour des raisons de commodité mécanique, on approxime le cercle par un hexagone et on le divise en six secteurs désignés par I, II, III, IV, V, VI, fig. 4. Des surépaisseurs constantes dans chaque secteur causent des déphasages qui, en fonction du rang du secteur, sont respectivement égaux à : $0, \frac{2\pi}{3}, \frac{4\pi}{3}, 0, \frac{2\pi}{3}, \frac{4\pi}{3}$.

Deux secteurs opposés par la pointe font subir à l'onde le même déphasage, ils forment une paire à laquelle on associe un axe : aux secteurs I et IV est associé l'axe $\varphi_o$ aux secteurs I et VI est associé l'axe $\varphi'_o$ et aux secteurs II et V l'axe $\varphi''_o$ La direction du champ électrique est indiquée par une flèche inscrite sur les côtés de l'hexagone. Les secteurs I et IV rayonnent avec une polarisation parallèle à l'axe $\varphi_o$ (d'azimut $\varphi_o$) et ils rayonnent en opposition de phase, vu le sens des vecteurs champ électrique. A grande distance ou au foyer, si l'on focalise, on observe une frange noire avec champ électrique nul dans le plan passant par l'axe oz et $\varphi_o$, et croissant proportionnellement à la distance de ce plan : $\rho$ sin $(\varphi - \varphi_o)$. Ce champ ayant la direction exp $j\varphi_o$ et subissant un déphasage $2\varphi_o$ peut être représenté par le nombre complexe :

$$\exp(j\varphi_o)\ \rho\ \sin(\varphi - \varphi_o)\ \cos(\omega t - 2\varphi_o)$$

On trouve une expression analogue pour la paire de secteurs III, VI associée à l'axe $\varphi_o^{'}$ et la paire II, V associée à l'axe $\varphi_o^{''}$

On fait la somme de ces trois expressions après avoir remplacé les sinus et cosinus par leurs expressions en exponentielles. Les termes en $\varphi_o\ \varphi_o^{'}\ \varphi_o^{''}$ se neutralisent et il reste :

$$\frac{3}{4}\rho\exp j(\omega t - \varphi) = \sum_{\varphi_o\varphi_o'\varphi_o''} \exp(j\varphi_O)\rho\sin(\varphi - \varphi_O)\cos(\omega t - 2\varphi_O)$$

qui représente bien un mode quadripolaire tournant.

### c) L'onde initiale est polarisée rectilignement

et on veut obtenir des lignes de champ en forme de cercles concentriques ou d'hyperboles équilatères homothétiques. On utilise un transformateur de mode formé de six lames demi-onde de forme triangulaire groupées pour former un hexagone et tenant par adhésion moléculaire sur un bloc de silice fondue parfaitement poli (figures 5 et 6). Le quartz est un bon matériau pour réaliser des lames demi-onde pour $\lambda = 1\ \mu m$. Ces lames ont deux axes dits axe rapide et axe lent. En incidence normale, les polarisations de l'onde incidente et de l'onde émergente sont symétriques par rapport aux axes rapide et lent. Ainsi, pour obtenir une certaine configuration de champs, il suffit dans chaque portion de surface de disposer l'axe rapide de la lame demi-onde suivant la bissectrice entre la direction du champ initial et la direction du champ désiré.

Pour obtenir des lignes de champ hexagonales à partir de lignes de champ rectilignes et parallèles il faut dans chaque triangle disposer les axes rapides des lames selon les bissectrices des angles formés par les côtés de l'hexagone et l'azimut fixe $\pi/2$ correspondant à la direction du champ électrique de l'onde initiale. L'orientation de l'axe rapide suivant le secteur I, II, III, etc... est donc :

$$0, \frac{\pi}{6}, \frac{\pi}{3}, \frac{\pi}{2}, \frac{\pi}{3}, \frac{\pi}{6}$$

Ces axes rapides sont inscrits sur la figure 8 en traits qui pour trois triangles sont parallèles à un côté et pour les trois autres sont parallèles à une hauteur.

On a ainsi obtenu une onde $TE_o$. Pour la transformer selon le mode quadripolaire tournant il faut superposer au dioptre des surépaisseurs telles que celles qui ont été définies dans le cas "b".

Dans le cas où l'onde initiale est rectilignement polarisée et où l'on cherche à obtenir des lignes de champ hyperboliques, c'est-à-dire telles qu'en un point $\rho$, $\varphi$ la tangente à l'hyperbole ait pour azimut $-\varphi$ et le champ de l'onde initial ait pour azimut 0, l'axe rapide de la lame demi-onde aura pour azimut $-\frac{\varphi}{2}$. La différence entre l'azimut $\varphi$ du rayon vecteur passant par le centre de la lame demi-onde et l'azimut de l'axe rapide est donc $\frac{3\varphi}{2}$.

Lorsque ce rayon vecteur prendra les directions $0, \frac{\pi}{3}, \frac{2\pi}{3}$, etc... l'orientation de l'axe rapide par rapport à ce rayon vecteur sera alternativement $0, \frac{\pi}{2}, 0, \frac{\pi}{2}$ etc... comme on le voit sur la figure 9.

Si l'on fait tourner de $\frac{\pi}{2}$ la polarisation de l'onde initiale, la polarisation de l'onde émergente tournera de $\frac{\pi}{2}$ en sens contraire dans tous les secteurs c'est-à-dire que l'on passera d'une famille d'hyperboles équilatères à la famille orthogonale. Ainsi, si l'onde initiale est une onde polarisée circulairement, c'est-à-dire formée de deux ondes polarisées perpendiculairement et en quadrature de phase, l'onde émergente sera quadripolaire tournante.

C'est une autre façon de passer de la polarisation circulaire au mode quadripolaire.

On remarque que lorsqu'on intercepte un faisceau polarisé circulairement, avec une lame demi-onde, on change le sens de rotation de l'onde et si l'on fait tourner la lame demi-onde dans son plan, l'onde émergente subit un déphasage égal à deux fois l'angle de rotation de la lame demi-onde. En somme le dispositif illustré figure 6 joue par rapport à l'onde polarisée circulairement le rôle de déphaseur azimutal dont il a été question dans le cas "a".

### d) Laser au dioxyde de carbone rayonnant selon le mode $TE_o$

Le brevet 79.05542 décrit différents moyens pour transformer une onde se propageant selon le mode $TM_o$ en onde se propageant selon le mode $TE_o$. Ces modes sont à symétrie de révolution : le mode $TM_o$ est celui dont les lignes de champ électrique sont inscrites dans des plans méridiens et en ce qui concerne leur partie intéressante, sont radiales. Le mode $TE_o$ est celui dont les lignes de champ électrique sont des cercles axés sur l'axe du mode. Parmi ces moyens on cite d'une part une cuve à effet Faraday. On appelle ainsi l'effet de rotation du plan de polarisation d'une onde plane provoqué par un champ magnétique parallèle à la direction de propagation. Et d'autre part un ensemble de deux lames demi-ondes plaquées l'une sur l'autre de telle sorte que les axes rapide et lent de l'une soient les bissectrices des axes de l'autre. D'une façon plus générale figure 5 soit $\gamma$ l'angle que font les axes rapides $A_1$, $A_2$ de deux lames demi-onde accolées qui reçoivent sous incidence normale une lumière polarisée dont le champ électrique I fait l'angle a avec l'axe rapide de la première lame qu'il rencontre. Il en sort en position II symétrique de I par rapport à $A_1$. Il fait alors un angle $\gamma$-$\alpha$ avec $A_2$ et sort de la seconde lame en III symétrique de II par rapport à $A_2$. L'orientation III fait avec l'orientation I l'angle $2\gamma$ et à $\gamma = \frac{\pi}{4}$ on a bien la rotation $\frac{\pi}{2}$ prévue.

En se référant maintenant à la figure 10, on a représenté en coupe axiale un laser à dioxyde de carbone émettant une onde $TE_o$. Il se compose d'un laser à dioxyde de carbone proprement dit, résonnant selon le mode $TM_o$ et d'un convertisseur de mode $TM_o$-$TE_o$. La cavité résonnante 30 du laser est limitée par un miroir métallique 31 de forme annulaire et par une fenêtre semi-réfléchissante 32 à couches multiples dont la technique est bien connue. L'homme de l'art sait calculer la courbure qu'il convient de donner à la méridienne du miroir 31 pour que le faisceau soit stable. Dans la cavité résonnante sont situées deux électrodes cylindriques coaxiales 33 et 34 entre lesquelles un générateur d'impulsions applique une tension. Selon une variante de l'invention la surface de l'électrode se présente comme une vis de façon à éviter que le claquage ait lieu suivant une génératrice privilégiée. Un diviseur de tension 35 permet de porter le miroir métallique 31 à une tension intermédiaire entre celles des électrodes 33 et 34. Des supports 35 permettent, grâce à des vis micrométriques non représentées, de régler avec précision la position du miroir 31. Le dioxyde de carbone est contenu dans une bouteille d'où il est amené dans la cavité résonnante 30 sous une pression voisine de la pression atmosphérique.

Le laser à dioxyde de carbone émet une onde sous le mode $TM_o$. Le mode $TM_o$ est filtré par les dioptres coniques 36 et 37 qui limitent le bloc transparent situé dans la cavité résonnante 30. L'angle d'incidence des rayons parallèles sur les dioptres est l'incidence de Brewster, c'est-à-dire que la tangente de cet angle d'incidence est égale à l'indice de réfraction du bloc transparent. Pour les ondes de 10µm émises par le laser à dioxyde de carbone, les substances transparentes les plus utilisées sont le sulfure et le séléniure de zinc.

La cuve 38 contient un liquide qui sous l'effet du champ magnétique engendré par le courant continu circulant dans la bobine 39 fait tourner le champ électrique de l'onde de $\frac{\pi}{2}$. Ce phénomène est connu sous le nom d'effet Faraday. Il est utilisé dans des commutations. Ici, l'inventeur l'applique pour transformer les ondes $TM_o$ dont le champ électrique est radial, en ondes $TE_o$ dont le champ électrique est orthoradial.

Les ondes qui par claquage ont été engendrées entre les électrodes 33 et 34 sous forme $TM_o$ sont transformées en onde $TE_o$ par effet Faraday dans la cuve 38, elles rencontrent sous cette forme $TE_o$ le semi réflecteur 32. Une partie est rayonnée, l'autre est réfléchie, tourne de $\frac{\pi}{2}$ en retraversant la cuve 38 et se retrouve sous forme $TM_o$ pour traverser le filtre de mode formé par les dioptres 36 et 37. Elle traverse le laser proprement dit entre les deux électrodes 33 et 34 et rencontre le miroir annulaire 31 toujours sous la forme $TM_o$ pour être à nouveau réfléchie.

La surtension du résonateur ainsi constitué entre les miroirs 31 et 32 dépend du courant qui circule dans la bobine 39. On peut en contrôlant ce courant obtenir un découpeur d'impulsions.

Selon une autre variante de mise en oeuvre de l'invention, la transformation du mode $TM_o$ en mode $TE_o$ se fait à l'aide de deux lames demi-ondes appliquées l'une sur l'autre de telle sorte que les axes rapide et lent de l'une coïncident avec les bissectrices des axes rapide et lent de l'autre. L'ensemble de ces deux lames est appliqué sur le semi réflecteur 32 de la fig.10 sur laquelle on supprime la cuve à effet Faraday 38 et la bobine 39 qui la contrôle. On perd ainsi la possibilité de découper les impulsions mais on réalise un dispositif plus simple et fonctionnant sans apport d'énergie. Malheureusement, pour $\lambda = 10$ µm les diélectriques anisotropes naturels sont rares. Le brevet 79.05542 montre comment on peut réaliser des diélectriques anisotropes artificiels.

Quelle que soit la façon dont le mode $TE_o$ a été obtenu, pour passer ensuite au mode quadripolaire tournant qui produit le confinement, il faut appliquer sur la face de sortie du dispositif illustré fig.10 un déphaseur azimutal tel que ceux illustrés fig.6 et 7.

L'ensemble des composants, que l'on vient de décrire, ont fait l'objet de brevets anciens dont l'inventeur fait une application nouvelle en vue de réaliser un système qui produit de l'énergie électrique à partir de la fusion électro-catalysée du deutérium.

L'invention sera mieux comprise par les explications qui vont être données en corrélation avec la description des figures

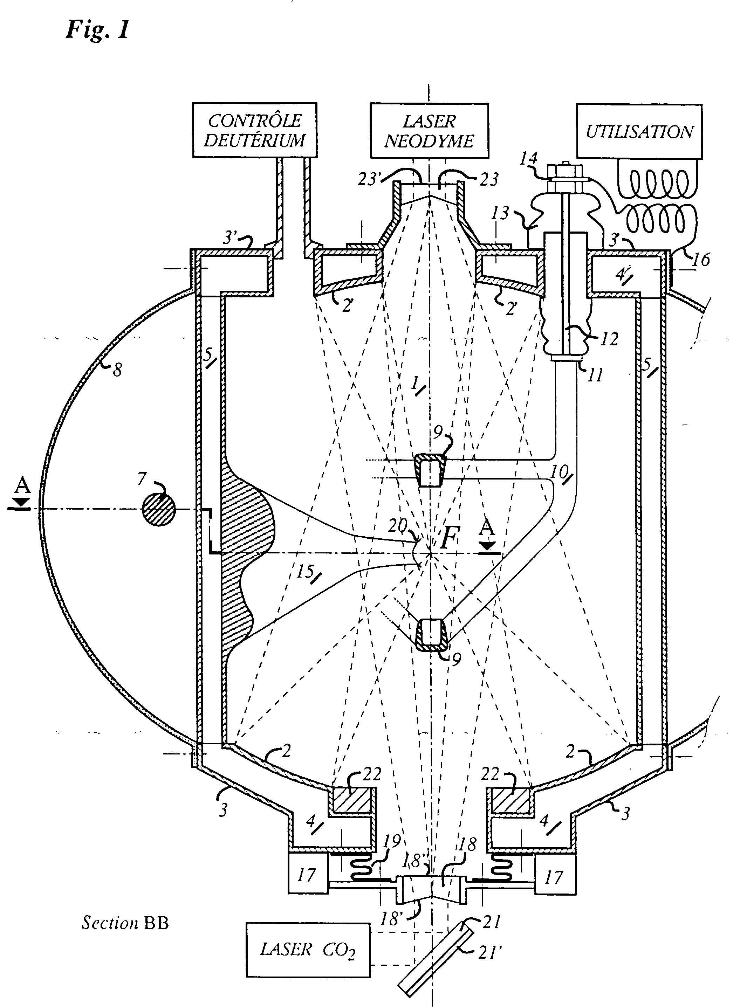

Les figures 1 et 2 sont des coupes par un plan méridien et par un plan perpendiculaire à l'axe du dispositif objet de l'invention.

La figure 3 est une carte du champ quadripolaire.

Les figures 4 et 5 sont des schémas explicatifs.

Les figures 6, 7, 8 et 9 sont des "convertisseurs de modes" décrits dans le brevet 76.38960 déposé le 23 décembre 1976 et publié sous le n° 2.385.241 qui reçoivent ici une application nouvelle.

La figure 10 concerne un "convertisseur de mode $TE_o$-$TM_o$" décrit dans le brevet 79.05542 déposé le 2 mars 1979, publié sous le n° 2.450.518 qui reçoit ici une application nouvelle.

Sur la figure 1 qui est une coupe méridienne du système objet de l'invention, on voit comment les rayonnements des lasers au néodyme d'une part et au dioxyde de carbone d'autre part sont concentrés en un même point F dans une chambre 1 contenant du deutérium pur, par deux miroirs métalliques 2 et 2'.

Ces miroirs sont raidis sur leur face arrière par des cloisons recouvertes par des capots 3 et 3' de telle sorte qu'une circulation de liquide refroidissant est organisée dans les espaces 4 et 4' restés libres entre 2 et 3 d'une part et 2' et 3' d'autre part. Les ensembles 2, 3, 4 et 2', 3', 4' sont réunis par huit colonnes creuses 5 qui permettent au liquide refroidissant de passer d'un ensemble à l'autre. Des fenêtres rectangulaires 6 à double vitrage sont disposées entre les colonnes 5 et les ensembles 2, 3, 4 et 2', 3', 4'. Elles donnent à l'ensemble l'aspect d'une lanterne.

A l'intérieur de la double paroi de verre circule un liquide réfrigérant qui laisse passer les radiations utiles pour le pompage des lasers 7 et absorbe les autres. La section du laser 7 apparaît sur la figure 1 par suite d'un décrochement de la coupe indiquée figure 2.

Sur cette figure 2 on remarque que les faisceaux qui sortent du laser 7 sous l'angle de Brewster font avec l'axe du barreau un angle voisin de 22,5°. Il en résulte que l'angle que font entre eux deux barreaux successifs est voisin de 45°, ils se rangent donc comme les côtés d'un octogone. C'est pourquoi on a choisi un ensemble de huit colonnes qui interceptent la lumière entre les barreaux. Des capots 8 ont une forme telle qu'ils concentrent sur les lasers au néodyme la lumière issue du foyer de fusion F et sortant par les fenêtres 6.

Les lasers provoquent en F une explosion bipolaire d'électrons. Ces derniers sont lancés dans les deux sens d'une direction voisine de l'axe, vers les anodes 9. Ces anodes sont réunies-entre elles par un conducteur métallique 10 situé dans un plan méridien et assez plat pour ne pas perturber les faisceaux laser. Ce conducteur métallique est fixé dans un épaulement 11 solidaire d'une tige métallique 12 qui sort de la chambre 1 à travers une bougie en céramique 13 et aboutit à une borne 14 reliée aux circuits d'utilisation.

Entre deux explosions, il convient de restaurer la neutralité du plasma. A cet effet, une lame 15 solidaire d'une colonne 5 s'avance vers le foyer. Elle est située dans un plan méridien pour ne pas perturber le rayonnement des lasers.

Du point de vue des échanges d'énergie électrique. les anodes 9 reliées à la bobine de self-inductance 16 font partie d'un circuit oscillant. A l'intérieur de la chambre 1 les électrodes 15 représentent la masse. Un champ électrique oscillant très important apparaît entre 9 et 15. C'est en travaillant contre ce champ que les électrons lancés par l'explosion thermonucléaire fournissent l'énergie électrique. Une explosion fournit quelques joules et peut être renouvelée plusieurs dizaines de milliers de fois par seconde, ce qui laisse espérer une puissance électrique approchant le mégawatt.

Pour éviter les courants aberrants qui pourraient se produire dans le plasma, il est prudent d'isoler les surfaces externes des anodes 9 et des conducteurs métalliques 10. Les électrons sont reçus par les anodes 9 qui sont creuses comme dans une cage de Faraday.

Pour assurer aux anodes un positionnement mécaniquement plus stable on peut doubler l'ensemble 10, 11, 12, 13 par un ensemble identique, symétrique par rapport à l'axe.

Le centrage réciproque des faisceaux demande une grande précision. Pour y parvenir, on dispose à l'extrémité de l'électrode 15 quatre couples thermo-électriques. Et de même pour l'extrémité de l'électrode qui lui est symétrique par rapport à l'axe et n'est pas représentée. Cet ensemble de huit couples disposés comme les sommets d'un parallélépipède autour du foyer géométrique F permet de repérer la position des faisceaux, et fournit les mesures d'erreur à partir desquelles le dispositif 17 asservit la position de la lentille 18 pour que les foyers des faisceaux coïncident.

Un soufflet métallique 19 permet de régler la position de la lentille 18 tout en maintenant l'étanchéité de la chambre 1.

Pour produire la fusion il faut que, comme le montre la théorie développée ci-dessus, l'énergie des faisceaux concentrée au foyer soit sous le mode quadripolaire tournant. Pour réaliser cette condition on utilise les dispositifs illustrés figures 6, 7, 8, 9, 10.

L'onde émise par le laser à dioxyde de carbone a ses rayons moins inclinés par rapport à l'axe que celle émise par le laser au néodyme. On peut, dans le premier cas, se contenter de transformer l'onde émise avec une polarisation rectiligne en onde polarisée circulairement puis utiliser un déphaseur azimutal tel que celui de la figure 6 ou de la figuré 7, pour produire un mode quadripolaire tournant.

Dans le second cas, les rayons étant très inclinés par rapport à l'axe, il convient de transformer l'onde polarisée linéairement issue du laser au néodyme en onde se propageant selon le mode $TE_o$. A cet effet on utilise un transformateur de mode tel que celui de la figure 7 puis on produit un déphasage égal à deux fois l'azimut pour obtenir un mode quadripolaire tournant transverse électrique.

De façon plus précise : dans le premier cas l'onde polarisée rectilignement issue du laser à dioxyde de carbone rencontre sous l'angle d'incidence de Brewster un miroir formé d'une couche diélectrique 21 appliquée sur un plan métallique 21'. La polarisation de l'onde incidente est inclinée de telle sorte que la composante dont le champ électrique est dans le plan d'incidence ait même intensité que la composante perpendiculaire. La première composante traverse le dioptre sans réflexion, et se réfléchit sur le métal, la seconde composante est réfléchie par le dioptre et subit des réflexions multiples. Le diélectrique est choisi et son épaisseur calculée pour que le déphasage entre les deux composantes émergentes soit de $\frac{\pi}{2}$. On obtient ainsi une onde polarisée circulairement qui est réfléchie vers la lentille 18.

Cette lentille est limitée par deux dioptres 18' et 18" : le dioptre 18' est conique de telle sorte que les rayons sont dirigés vers le miroir 2' en évitant les anodes 9 ; le dioptre 18" porte le déphaseur azimutal. Pour constituer ce déphaseur à partir du dioptre plan 18" on procède par évaporation et condensation sous vide de façon à constituer six marches correspondant aux six secteurs figure 7, le pas de chaque marche étant égal à $\frac{\lambda}{6(n-1)}$, n étant l'indice du diélectrique constituant les marches. Après leur passage dans la région du foyer F, les ondes $\lambda = 10 \ \mu m$ abandonnent ce qui leur reste d'énergie dans l'absorbeur 22.

De même pour le second cas : le rectangle portant l'indicatif "laser au néodyme" est l'aboutissement d'un système optique qui rayonne à travers la lentille 23 l'énergie provenant des barreaux 7. Cette énergie optique est rectilignement polarisée. Le dioptre plan 23' de la lentille 23 porte un transformateur de mode tel que celui illustré figure 8 qui transforme l'onde polarisée rectilignement, en onde dont les lignes de champ sont des hexagones que la diffraction transforme rapidement en cercles, on dit alors que l'on a affaire à un mode $TE_o$ Pour passer au mode quadripolaire tournant on utilise un déphaseur azimutal différent du précédent, les marches ont une épaisseur double : se référant à la figure 4 la surépaisseur sur les secteurs II et V est $\frac{\lambda}{3(n-1)}$ et la surépaisseur sur les vecteurs III et IV est $\frac{2\lambda}{3(n-1)}$. Il faut prendre garde que dans les deux cas la montée des marches aille dans le même sens en tournant autour de l'axe.

Selon une variante au lieu d'utiliser le laser classique à dioxyde de carbone on utilise le laser coaxial représenté figure 10 et précédemment décrit. Le déphaseur azimutal qui l'accompagne doit alors produire un déphasage égal à deux fois l'azimut comme dans le cas décrit à propos du laser au néodyme.

Ce laser coaxial lui-même peut prendre deux formes : celle illustrée fig.10 où la transformation du mode $TM_o$ et $TE_o$ se fait par effet Faraday dans la cuve 38 et celle où au lieu de cette cuve on utilise deux lames demi-onde superposées de telle sorte que les axes rapide et lent de l'une coïncide avec les bissectrices des axes de l'autre.

Selon une autre variante de l'invention : au lieu d'obtenir le déphasage azimutal en déposant des surépaisseurs de diélectrique sur les lentilles on l'obtient en déposant par électrolyse des surépaisseurs de métal sur les miroirs.

On a vu que le courant électrique macroscopique produit par la fusion électrocatalysée est l'aboutissement des instabilités d'un régime créé par les électrons relativistes lancés parallèlement dans les deux sens. Les électrons qui vont en sens contraire de ceux qui créent le confinement macroscopique sont dispersés alors que ceux qui vont dans le bon sens sont renouvelés par de nouvelles fusions.

Si on exploite le courant macroscopique lorsqu'il est parvenu à la stabilité on perd l'énergie de la moitié des électrons actifs, ce qui est le cas si l'on veut utiliser un tokamak comme générateur de courant électrique tandis que dans le cas de la présente invention on utilise les courants qui se précipitent vers les anodes 9 avant que leur répartition ne soit stabilisée, d'où un très bon rendement.

## Revendications

1. Dispositif provoquant la fusion thermonucléaire du deutérium et délivrant l'énergie produite sous forme d'énergie électrique, caractérisé en ce qu'il comporte : une chambre (1) contenant du deutérium et des moyens pour focaliser deux faisceaux lasers selon des modes quadripolaires tournant transverse électrique, qui ont pour axe commun l'axe de la chambre, l'un, dont la longueur d'onde est dix fois supérieure à celle de l'autre, génère une colonne de plasma qui, en son milieu, constitue la cible sur laquelle est concentrée l'énergie du second faisceau qui provoque l'ignition à partir de laquelle se propagent, de part et d'autre, dans la colonne de plasma, des ondes de choc électroniques qui s'amplifient au détriment de nouvelles fusions thermonucléaires et engendrent des impulsions de courant électrique recueillies par deux anodes (9) placées sur l'axe, à proximité des extrémités de la colonne de plasma ; des électrodes (15) reliées à la masse, présentant un saillant conducteur à la zone d'ignition ont pour but de rétablir l'électro neutralité du plasma.

2. Dispositif selon revendication 1, dans lequel les deux anodes (9) sont reliées entre elles par une plaque conductrice (10) elle-même reliée par une tige (12), à travers un dispositif isolant (13), aux circuits d'utilisation qui aboutissent à la borne (14).

3. Dispositif selon revendications 1 et 2, dans lequel la surface externe des anodes (9) et de la pièce (10) sont revêtues d'un isolant, les électrons étant reçus dans le creux des anodes (9) comme dans une cage de Faraday.

4. Dispositif selon revendications 1 et 2, dans lequel des couples thermosensibles (20) disposés assez près du foyer F, aux extrémités de l'électrode (15) net de sa symétrique par rapport à l'axe permettent de repérer avec précision la position des foyers des faisceaux et d'asservir leurs positions mutuelles à l'aide d'un servomécanisme (17) qui contrôle la position de la lentille (18), à cet effet un soufflet métallique (19) permet le mouvement tout en maintenant l'étanchéité de la chambre (1).

**5.** Dispositif selon revendications 1 et 2, dans lequel des miroirs (2, 2') concentrent au foyer les énergies provenant respectivement d'un laser au néodyme et d'un laser au dixoyde de carbone après avoir donné à cette énergie la forme de mode quadripolaire tournant à l'aide de "transformateurs de mode" et de "déphaseurs azimutaux".

**6.** Dispositif selon revendications 1, 2, 5 dans lequel l'onde polarisée linéairement provenant du laser au néodyme traverse un transformateur de mode composé de six lames demi-ondes triangulaires en quartz appliquées sur la face plane (23') de la lentille (23), les axes rapides de trois lames étant parallèles chacun à une base du triangle associé et les axes rapides des trois autres lames étant parallèles- chacun à une hauteur du triangle associé, la polarisation à l'entrée est dirigée selon oy et à la sortie les lignes de champ électrique sont hexagonales, l'onde subit ensuite un déphasage égal à deux fois l'azimut au moyen de marches constituées par des surépaisseurs de diélectrique déposées sur l'autre face de la lentille (23).

**7.** Dispositif selon revendications 1, 2, 5, dans lequel l'onde polarisée rectilignement issue d'un laser à dixoyde de carbone est réfléchie par un miroir (21, 21') qui la transforme en onde polarisée circulairement, puis subit ensuite un déphasage égal à l'azimut à l'aide de surépaisseurs de diélectrique déposées sur une face (18") de la lentille (18).

**8.** Dispositif selon revendications 1, 2, 5 dans lequel l'onde qui entre par la lentille (18) est issue d'un laser coaxial à dixoyde de carbone, le mode TMo issu du coaxial est transformé en mode TEo par effet Faraday dans la cuve (38), puis l'onde subit un déphasage égal à deux fois l'azimut à l'aide de surépaisseurs de diélectrique déposées sur une face (18") de la lentille (18).

**9.** Dispositif selon la revendication 8, dans lequel le passage du mode TMo au mode TEo s'opère en traversant deux lames demi-ondes superposées de telle sorte que les axes rapide et lent de l'une soient les bissectrices des axes de l'autre.

**10.** Dispositif selon l'une des revendications 1 à 9, dans lequel on produit le déphasage, azimutal par-réflexion à l'aide de surépaisseurs de métal déposées électrolytiquement sur les miroirs métallique (2, 2') au lieu des surépaisseurs de diélectriques.

**11.** Dispositif selon revendications 1, 2, 5, dans lequel les deux ensembles métalliques portant les miroirs (2, 2') sont réunis par huit colonnes entre lesquelles sont aménagées huit fenêtres qui laissent passer la lumière utilisée pour le pompage des lasers au néodyme.

## Fig. 1

CONTRÔLE DEUTÉRIUM

LASER NEODYME

UTILISATION

LASER $CO_2$

Section BB

**Fig. 2**

Section AA

**Fig. 3**

**Fig. 4**

**Fig. 5**

*Fig. 6*          *Fig. 7*

*Fig. 8*          *Fig. 9*

*Fig. 10*

CONTRÔLE CO₂

HT

**Office européen des brevets**

# RAPPORT DE RECHERCHE EUROPEENNE

Numero de la demande

EP 96 40 2361

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | FR 2 718 275 A (MARIE G R P) 6 Octobre 1995<br>* page 13, ligne 3 - page 14, ligne 19 *<br>* revendication; figure 4 *<br>--- | 1,3,5,11 | G21B1/00<br>H05H1/22 |
| D,A | FR 2 690 778 A (MARIE PIERRE) 5 Novembre 1993<br>* page 10, ligne 23 - page 13, ligne 18 *<br>* page 20, ligne 31 - page 21, ligne 16 *<br>* figure 1 *<br>--- | 1,4,5,11 | |
| D,A | FR 2 385 241 A (MARIE G R P) 20 Octobre 1978<br>* page 1, ligne 8 - ligne 18 *<br>* page 10, ligne 28 - page 12, ligne 9 *<br>* figures 4,5 *<br>--- | 6,7,9 | |
| A | FR 2 415 379 A (MARIE G R P) 17 Août 1979<br>* page 14, ligne 27 - page 17, ligne 17 *<br>* page 17, ligne 35 - page 21, ligne 35 *<br>--- | 5-8 | |
| A | EP 0 227 265 A (UNIV PRINCETON) 1 Juillet 1987<br>--- | | |
| A | FR 2 153 640 A (CGE) 4 Mai 1973<br>--- | | |
| A | US 3 995 136 A (STEIGER ARNO D ET AL) 30 Novembre 1976<br>----- | | |

DOMAINES TECHNIQUES RECHERCHES (Int.Cl.6)

G21B
H05H

Le présent rapport a été établi pour toutes les revendications

| Lieu de la recherche | Date d'achèvement de la recherche | Examinateur |
|---|---|---|
| LA HAYE | 3 Février 1997 | Capostagno, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)